# FASCICULE DE BREVET EUROPEEN

(11) **EP 3 913 237 B1**
(45) Date de publication et mention de la délivrance du brevet: **22.05.2024**
(21) Numéro de dépôt: 21166031.1
(22) Date de dépôt: 30.03.2021
(51) Int. Cl.: F16B 37/08, F16B 37/04, F16B 5/02, F16B 2/24, F16B 5/06

(54) **DISPOSITIF DE FIXATION**
BEFESTIGUNGSVORRICHTUNG
ATTACHMENT DEVICE

(30) Priorité: 20.05.2020 FR 2005178
(43) Date de publication de la demande: 24.11.2021
(73) Titulaire: A. Raymond et Cie, 38000 Grenoble (FR)
(72) Inventeur: GARNIER, Alexis, 38450 Vif (FR); ALBARAN, Jean-François, 38760 Varces Allieres Et Risset (FR)
(74) Mandataire: IP Trust

(56) Documents cités:
- EP-A1- 3 348 847
- EP-A2- 1 849 687
- EP-A2- 2 735 748
- US-A1- 2017 284 437

## Description

### DOMAINE DE L'INVENTION

La présente invention concerne un dispositif de fixation d'un assemblage comprenant un premier support muni d'une ouverture et un deuxième support muni d'un élément fileté. Elle trouve son application dans le domaine de l'automobile, par exemple pour fixer un déflecteur sous une paroi sous caisse d'un véhicule automobile.

### ARRIERE PLAN TECHNOLOGIQUE DE L'INVENTION

Les déflecteurs sous caisse, c'est à dire les déflecteurs disposés sous l'ensemble rigide qui compose un véhicule, ont pour but de protéger la partie inférieure du véhicule, notamment contre le gravillonnage ainsi que contre le risque de corrosion.

Ces pièces sont volumineuses et nécessitent d'être fixées au véhicule en plusieurs points de fixation. L'ensemble rigide sur lequel est destiné à être fixé le déflecteur est muni de goujons soudés aux points de fixation. Le déflecteur est muni d'une pluralité d'ouvertures, chaque ouverture étant disposée pour être placée en vis-à-vis d'un élément fileté tel qu'un goujon. Un dispositif de fixation est ensuite fixé au goujon pour y retenir le déflecteur en chaque point de fixation afin d'assurer l'assemblage du déflecteur au véhicule.

Un tel dispositif de fixation est connu du document EP2851570. Ce dispositif de fixation nécessite d'être vissé sur le goujon, ce qui est particulièrement contraignant et long, d'autant qu'il y a généralement plus d'une vingtaine de point de fixation. Il est alors souhaitable de disposer d'un dispositif de fixation ne nécessitant pas d'étape de vissage.

On connaît d'autres dispositifs de fixation des documents US20170284437, EP3054177, EP1849687, EP2735748 et EP3348847. Ces dispositifs comprennent des moyens de retenue venant s'engager dans les filets du goujon pour effectuer l'assemblage par clippage. Ce type de dispositif ne nécessite ainsi pas d'outil et simplifie l'assemblage.

Il peut exister un défaut d'alignement entre la pluralité d'ouverture aménagée sur la pièce à assembler et les éléments filetés disposés sur la structure rigide du véhicule. Il est donc particulièrement important que le dispositif de fixation puisse s'adapter et compenser ces écarts pour réduire la pénibilité sur les lignes d'opérations et économiser du temps de montage.

### OBJET DE L'INVENTION

Un but de l'invention est de proposer un dispositif de fixation remédiant aux inconvénients précités. Plus particulièrement, l'invention porte sur un dispositif de fixation ne nécessitant pas d'étape de vissage et permettant de rattraper le désalignement pouvant exister entre les éléments à assembler.

### BREVE DESCRIPTION DE L'INVENTION

En vue de la réalisation de ce but, l'objet de l'invention propose un dispositif de fixation selon la revendication 1.

Selon d'autres caractéristiques avantageuses et non limitatives de l'invention, prises seules ou selon toute combinaison techniquement réalisable :
- les moyens de retenue sont des languettes flexibles comprenant chacune une extrémité libre destinée à s'engager dans les filets de l'élément fileté ;
- les éléments de maintien comprennent des ailes flexibles incurvées ;
- le pied du corps principal est muni, sur sa surface externe, d'au moins un ergot susceptible de prendre appui sur le premier support et retenir assemblés le corps principal au premier support ;

- la tête du corps principal présente un élément saillant conformé pour être manipulable en rotation par un outil ;
- l'extrémité d'insertion du pied est formée d'un cône de centrage afin de guider l'insertion de l'élément fileté dans le corps principal lors de l'assemblage du premier support au deuxième support ;
- la tête du corps principal comprend, sur une surface inférieure, une rainure ou un épaulement annulaire pour recevoir des ergots de recentrage disposés en périphérie de l'ouverture du premier support ;
- l'agrafe de fixation comprend des pattes de mise en tension pour garantir le placage du dispositif ainsi que la tenue de l'agrafe au corps principal en assurant une tension permanente de l'agrafe au sein du logement ;
- l'extrémité du pied comprend des bretelles flexibles ;
- le pied comprend sur sa surface externe des plans inclinés vers l'intérieur du logement afin de centrer et de guider l'insertion de l'agrafe de verrouillage dans le logement ;
- le logement comprend sur une surface interne des butées anti-retour pour prévenir le retrait l'agrafe de verrouillage du logement ;

• les éléments de maintien présentent une envergure suffisante pour s'étendre sous le premier support quelle que soit la position radiale du dispositif dans l'ouverture.

### BREVE DESCRIPTION DES FIGURES

D'autres caractéristiques et avantages de l'invention ressortiront de la description détaillée de l'invention qui va suivre en référence aux figures annexées sur lesquels :
- La figure 1 représente une vue d'ensemble d'un dispositif de fixation conforme à l'invention ;
- Les figures 2a et 2b représentent une vue d'ensemble d'un corps principal conforme à l'invention selon différentes orientations ;
- Les figures 3a et 3b représentent respectivement une vue d'ensemble d'une agrafe de verrouillage conforme à l'invention selon une vue de dessus et une vue d'en dessous ;
- Les figures 4a à 4c représentent respectivement les différentes étapes de la mise en oeuvre d'un dispositif de fixation conforme à l'invention ;
- La figure 5 représente une vue en coupe d'un dispositif de fixation, conforme à l'invention, assemblé à un premier et un deuxième support ;
- La figure 6a représente une vue d'ensemble d'un dispositif de fixation conforme à l'invention selon un autre mode de réalisation ;
- La figure 6b représente une vue d'ensemble d'un dispositif de fixation, conforme à l'invention selon un autre mode de réalisation, assemblé à un premier et un deuxième support.

### DESCRIPTION DETAILLEE DE L'INVENTION

### Présentation générale du dispositif de fixation

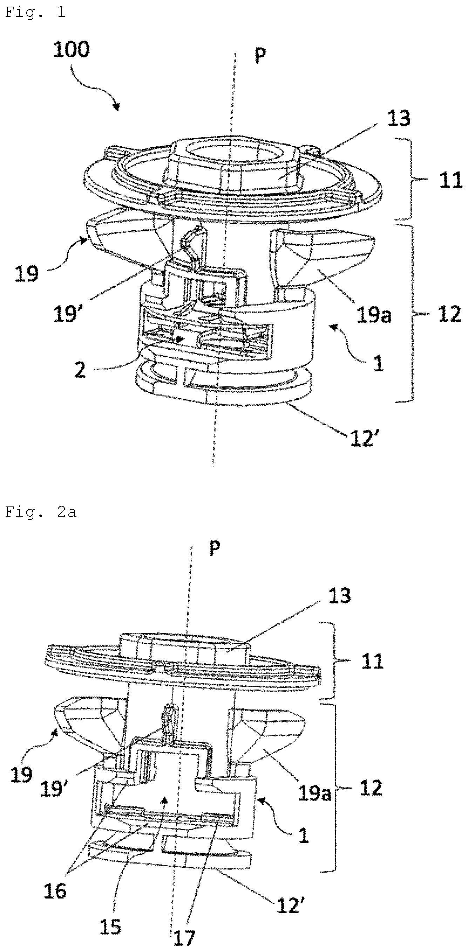

La figure 1 représente une vue d'ensemble d'un dispositif de fixation 100 conforme à l'invention.

Le dispositif de fixation 100 a pour but d'assembler un premier support 4, par exemple un déflecteur, muni d'au moins une ouverture 40 à un deuxième support 5, par exemple une partie rigide inférieure d'un véhicule, muni d'au moins un élément fileté 3, ici un goujon 3. Le premier support 4 comprend typiquement plusieurs ouvertures 40 destinées à recevoir respectivement plusieurs goujons 3. Et comme cela a été précisé en introduction de cette demande, il est possible que dans une telle situation toutes les ouvertures 40,10 ne soient pas respectivement parfaitement en correspondance avec les axes des goujons 3. Par souci de clarté toutefois, la présente description portera sur un unique dispositif de fixation 100, étant entendu que l'assemblage d'un support 4, tel qu'un déflecteur, mettra généralement en oeuvre une pluralité de dispositifs de fixation 100, au moins l'un de ces dispositifs pouvant être conforme à l'invention.

En référence à la figure 1, le dispositif de fixation 100 comprend un corps principal 1, définissant un passage interne 10 pour recevoir le goujon 3, ainsi qu'une agrafe de verrouillage 2 disposée dans le corps principal 1. Le corps principal 1 a pour fonctions d'assembler le dispositif 100 au premier support 4, de retenir l'agrafe de verrouillage 2 ainsi que de permettre un rattrapage d'un éventuel désalignement entre le premier support 4 et le goujon 3 du deuxième support 5. L'agrafe de verrouillage 2 permet quant à elle le clippage du dispositif de fixation 100 sur le goujon 3, de manière à retenir fermement le support 4 au goujon 3 en créant une tension d'assemblage, et donc d'assembler le premier support 4 au deuxième support 5.

D'une manière très générale, pour réaliser l'assemblage du premier support 4 au deuxième support 5, on introduit le dispositif de fixation 100 dans l'ouverture 40 du premier support 4 pour fixer ce dispositif 100 à ce support 4 et engager le goujon 3 dans l'agrafe de verrouillage 2.

Le corps principal 1 est avantageusement formé d'un matériau plastique injectable, et obtenu par injection. L'agrafe de verrouillage 2 est avantageusement formée d'un métal, tel qu'un acier, et obtenu par découpage puis pliage d'une plaque de métal.

### Description détaillée du dispositif de fixation

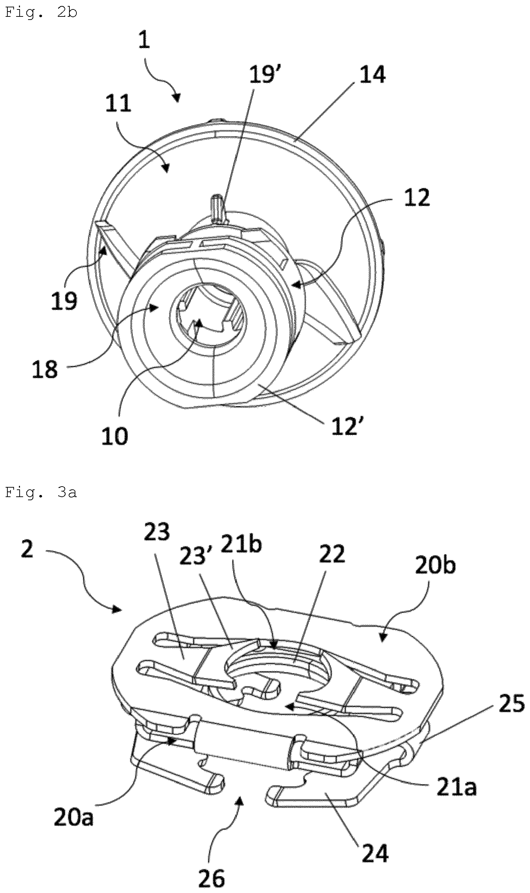

Les figures 2a et 2b représentent une vue d'ensemble d'un corps principal 1 conforme à l'invention selon différentes orientations. Le corps principal 1 défini un passage interne 10 s'étendant d'une première extrémité du corps 1, formant une tête 11, jusqu'à une seconde extrémité du corps opposée à la première extrémité, formant un pied 12.

La tête 11 est destinée à venir en butée contre le premier support 4 lorsque l'on engage le dispositif 100 par son pied 12 dans l'ouverture 40. Elle présente ici la forme d'un disque dont les dimensions sont supérieures à celles de l'ouverture 40, mais on pourrait envisager que la tête 11 présente une autre forme. Avantageusement, la tête 11 présente un élément saillant 13 conformé pour être manipulable par un outil, par exemple un écrou 6-pans 13 comme cela est représentés sur les figures.

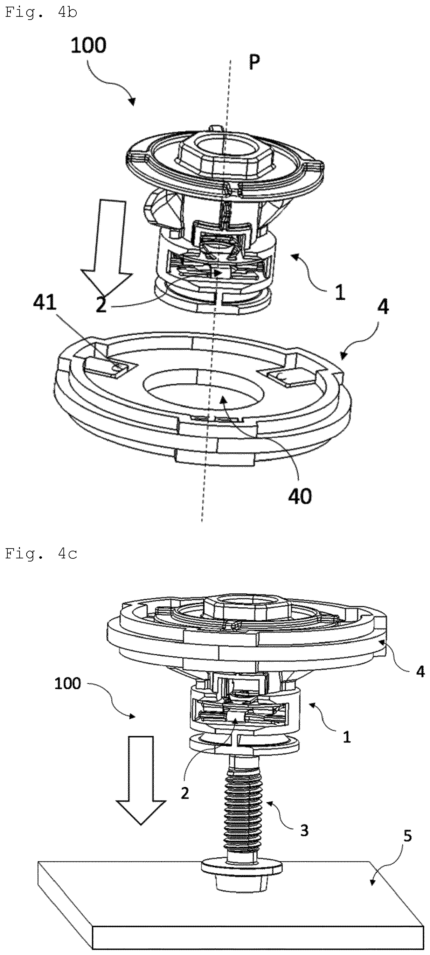

De manière optionnelle, la tête 11 peut comprendre une rainure ou un épaulement annulaire 14 disposé sur sa surface inférieure, c'est-à-dire la face de la tête orientée vers le pied 12 et susceptible d'entrer en contact avec le premier support 4. Cette rainure ou cet épaulement annulaire 14 est destiné à recevoir des ergots de recentrage 41 disposés en périphérie de l'ouverture 40 du premier support 4 comme cela est visible sur la figure 4b. Ces ergots 41, lorsqu'ils sont engagés dans la rainure ou l'épaulement annulaire 14, permettent de placer le corps principal 1 en position centrée dans l'ouverture 40 avant son assemblage au deuxième support 5.

Le pied 12 présente une extrémité 12' d'insertion du goujon 3 dans le passage interne 10. L'extrémité d'insertion 12' du pied 12, c'est-à-dire l'extrémité du pied 12 qui n'est pas reliée à la tête 11, fait face ou entre en contact avec le deuxième élément 5, lorsque le dispositif est entièrement assemblé. Dans cette configuration, le pied 12 du corps principal 1 est disposé entre le premier support 4 et le second support 5.

La section du pied 12, destiné à être en contact avec le bord de l'ouverture 40, présente une dimension radiale inférieure à la dimension de l'ouverture 40 pour permettre son passage et son déplacement dans le plan de cette ouverture 40 pour compenser les éventuels écarts d'alignement avec le goujon 3. On peut ainsi prévoir un déplacement radial dont l'amplitude maximale peut être de plusieurs millimètres d'un côté et de l'autre de la position centrée, par exemple jusque 5 mm. Le passage interne 10 est avantageusement de forme cylindrique et s'étend selon un axe d'insertion P. Le passage interne 10 débouche au niveau de l'extrémité d'insertion 12' du pied 12. Il peut également déboucher au niveau de la tête 11.

Le pied 12 comprend également une fenêtre latérale débouchant sur le passage interne 10. Cette fenêtre délimite un logement 15 pour accueillir l'agrafe de verrouillage 2. De manière optionnelle, le logement 15 peut traverser intégralement le pied 12, de manière transverse par rapport à l'axe d'insertion P, afin de rendre possible l'insertion de l'agrafe de verrouillage 2 selon deux directions différentes. Afin de faciliter l'insertion de l'agrafe de verrouillage 2 dans le logement 15, le pied 12 peut comprendre sur sa surface interne, au niveau des contours du logement 15, des plans inclinés 16. Ces plans 16 sont inclinés vers l'intérieur du logement 15 pour permettre de centrer l'agrafe 2 et de guider son insertion dans le logement 15. Le logement 15 peut comprendre sur sa surface interne des butées anti-retour 17 coopérant avec l'agrafe 2 pour prévenir son retrait du logement 15.

De manière avantageuse, l'extrémité d'insertion 12' du pied 12 est réalisée sous la forme d'un cône de centrage 18 (visible sur la figure 2b). Ce cône de centrage 18 permet de guider et centrer l'insertion du goujon 3 dans le corps principal 1 lors de l'assemblage du premier support 4 au deuxième support 5. Il permet de déplacer radialement (vis-à-vis de l'axe d'insertion P, c'est à dire dans le plan du premier support 4) le dispositif de fixation 100 dans l'ouverture 40 pour compenser un éventuel désalignement entre le goujon 3 et l'ouverture 40.

Le pied 12 est également muni, saillant sur sa surface externe et du côté de la tête 11, d'éléments de maintien 19 pour retenir assemblés le corps principal 1 au premier support 4. L'écart libre séparant les éléments de maintien 19 de la tête 11 correspond donc sensiblement à l'épaisseur du premier support 4. Les éléments de maintien 19 sont ici formés d'une paire d'ailes flexibles incurvées 19, axialement symétriques entre elles par rapport à l'axe d'insertion P. Les ailes flexibles 19 peuvent se déformer et s'effacer lors de l'insertion du pied 12 dans l'ouverture 40. A cet effet, et comme cela est visible sur la figure 2a, les ailes flexibles présentent chacune un plan incliné 19a sur lequel vient prendre appui le contour de l'ouverture 40 lors de l'insertion du dispositif 100 pour forcer leur déformation et leur effacement.

Les ailes 19 présentent une envergure suffisante pour s'étendre sous le premier support 4 quelle que soit la position radiale du dispositif de fixation 100 dans l'ouverture 40. Le corps principal 1 est ainsi toujours maintenu assemblé au premier support 4 même lorsque le dispositif de fixation 100 n'est pas parfaitement centré dans l'ouverture 40 pour compenser un désalignement.

De manière avantageuse, le pied 12 est également muni, sur sa surface externe, d'au moins un ergot 19', ici une paire symétrique d'ergots 19', disposé dans le même plan que les ailes flexibles 19. Ces ergots 19', qui peuvent être non flexibles, présentent une envergure réduite leur permettant de traverser l'ouverture 40. Ils forment une butée supplémentaire pour retenir le corps principal 1 assemblé au premier support 4 avec plus de sécurité, lorsque le dispositif de fixation 100 est déplacé radialement pour entrer en contact avec le contour de l'ouverture 40. Dans cette configuration en effet, une des ailes flexibles 19 peut s'étendre sous le premier support 4 sur une distance très réduite, qu'il peut être souhaitable de compenser.

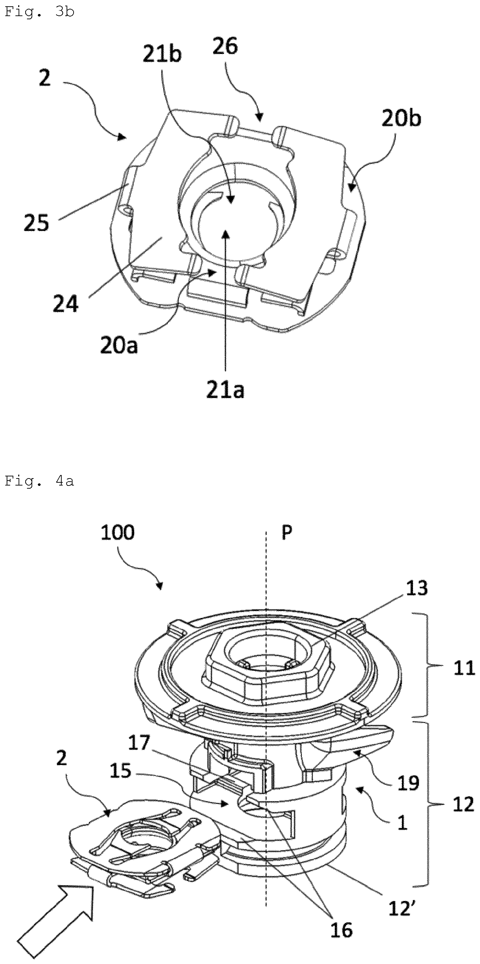

Les figures 3a et 3b représentent respectivement une vue d'ensemble d'une agrafe de verrouillage 2 conforme à l'invention selon une vue de dessus et une vue d'en dessous. L'agrafe de verrouillage 2 est destinée à être disposée dans le logement 15 du corps principal 1 (figure 1).

L'agrafe de verrouillage 2 présente une forme générale de U, avec des première et deuxième branches 20a, 20b sensiblement parallèles.

La première branche 20a et la deuxième branche 20b comportent chacune un trou de passage du goujon 3, respectivement référencés 21a,21b sur les figures. Le trou de passage 21a de la première branche 20a est avantageusement délimité, sur la surface de la première branche 20a orientée vers la deuxième branche 20b, par une nervure de renforcement 22.

Avantageusement, la première branche 20a comprend sous sa surface inférieure, des pattes de mise en tension 24, ici deux pattes de mise en tension 24. Les pattes de mise en tension 24 sont chacune reliée à la première branche 20a par un bras de liaison 25 permettant de les plier par rapport à la première branche 20a. Les pattes de mise en tension 24 sont espacées l'une de l'autre de manière à laisser un espace suffisant entre elles pour permettre le passage du goujon 3. Les pattes de mise en tension 24 peuvent délimiter entre elles des passages 26 pour recevoir les butées anti-retour 17 du logement 15. Les pattes de mise en tension 24 ont pour but de garantir le placage, pour éviter le décollement, du dispositif de fixation 100 ainsi que la tenue de l'agrafe 2 au corps principal 1 en assurant une tension permanente de l'agrafe 2 au sein du logement 15.

La deuxième branche 20b est munie de moyens de retenue 23 pour interagir avec le goujon 3 et assurer la fixation du dispositif 100 sur le goujon 3 du deuxième support 5. Le premier support 4 étant simultanément retenu par la tête 11 du dispositif 100, on assemble de la sorte le premier support 4 au deuxième support 5.

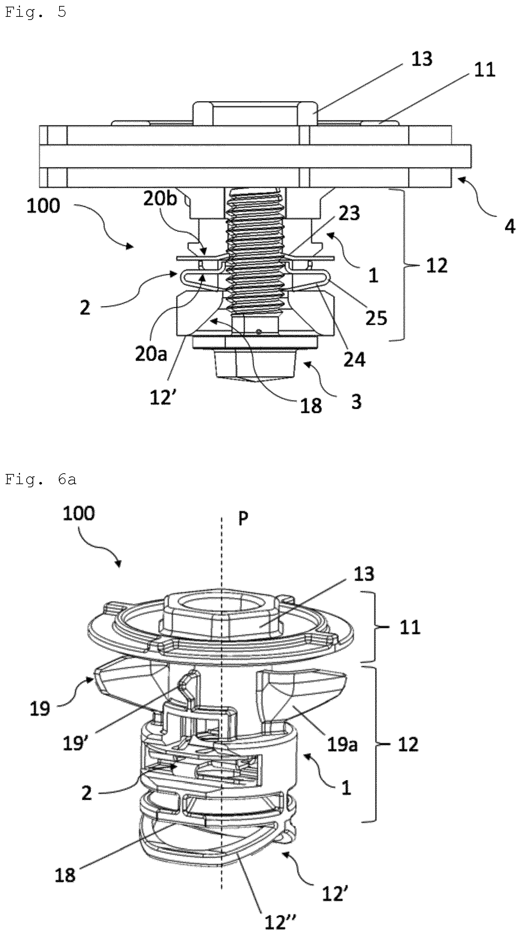

Les moyens de retenue 23 sont ici des languettes flexibles 23 comprenant chacune une extrémité libre 23' destinée à s'engager dans les filets du goujon 3 (figure 5). Les languettes flexibles 23 sont agencées pour être convergentes de sorte que leur extrémités libre 23' soient situées à la verticale du trou de passage 21a et déterminent entre elles un espace libre inférieur au diamètre du goujon 3. Chaque extrémité libre 23' présente avantageusement une creusure circulaire d'un diamètre correspondant au diamètre intérieur du filetage du goujon 3. Avantageusement l'extrémité libre 23' des languettes flexibles 23 est inclinée pour réduire les efforts d'introduction.

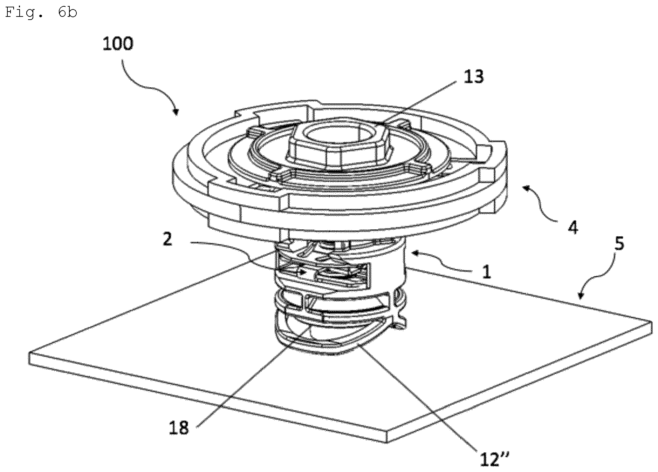

Selon un autre mode de réalisation, illustré sur les figures 6a et 6b, l'extrémité d'insertion 12' du corps principal 1 comprend, en plus du cône de centrage 18, des bretelles flexibles 12", ici deux bretelles flexibles 12". Les bretelles flexibles 12" sont chacune reliées au cône de centrage 18 par leurs deux extrémités et forment ainsi deux points de flexion fixes. Les bretelles 12" sont formées dans le prolongement du pied 12 sans modifier son diamètre et sans obstruer l'accès au passage interne 10. Les bretelles flexibles 12'' peuvent se déformer en se comprimant vers le cône de centrage 18.

Les bretelles flexibles 12" ont pour but de compenser l'existence d'un jeu de mouvement axial, selon l'axe d'insertion P, pouvant exister entre le premier support 4 et le deuxième support 5 quand l'extrémité libre 23' des languettes flexibles 23 s'insèrent dans les mauvais filets du goujon 3. Il peut arriver, en effet, que l'extrémité des languettes flexibles 23 s'insère dans un filet disposé au-dessus du filet correspondant au placement optimal, créant ainsi un jeu de mouvement axial. Ce jeu de mouvement est alors prévenu par la mise sous tension permanente du corps principal 1, entre le premier et deuxième support 4,5, par les bretelles flexibles 12''.

### Mise en oeuvre du dispositif de fixation

Les figures 4a à 4c représentent les différentes étapes de la mise en oeuvre d'un dispositif de fixation 100 conforme à l'invention.

Une première étape (figure 4a) de la mise en oeuvre du dispositif de fixation comprend l'assemblage de l'agrafe de verrouillage 2 au corps principal 1 pour former le dispositif de fixation 100. L'agrafe de verrouillage 2 est insérée dans le logement 15 du pied 12 du corps principal 1, les plans inclinés 16 guidant son insertion. Les pattes de mise en tension 24 se déforment également lors de l'insertion afin de permettre l'installation de l'agrafe 2 dans son logement 15 et les butées anti-retour 17 viennent se loger dans les passages 26. Si l'on tente de retirer l'agrafe 2, une fois installée dans le logement 15, les pattes de mise en tension 24 viennent en butée contre les butées anti-retour 17 du logement 15 prévenant ainsi le retrait de l'agrafe 2. En position assemblée, les trous de passage 21a, 21b de l'agrafe 2 sont alignés avec le passage interne 10 du corps principal 1.

La deuxième étape (figure 4b) comprend l'assemblage du dispositif de fixation 100 au premier support 4. Le pied 12 du corps principal 1 est introduit, selon l'axe d'insertion P, dans l'ouverture 40 du premier support 4 jusqu'à ce que la tête 11 du corps principal viennent en butée contre le premier support 4. Lors de l'insertion du pied 12, les ailes flexibles 19 se déforment contre le pied 12 pour leur permettre de franchir l'ouverture 40. Une fois la traversée de l'ouverture 40 effectuée, les ailes 19 reprennent leur configuration initiale et s'étendent sous le premier support 4. Le dispositif de fixation 100 est alors retenu assemblé au premier support 4, les ailes 19 et, éventuellement les ergots 19', venant en butée contre le premier support 4 si l'on tente d'extraire le dispositif 100 de l'ouverture 40.

A l'issu de cette étape, le dispositif de fixation 100 peut se déplacer dans le plan du premier support 4 pour permettre de rattraper le désalignement pouvant exister entre le premier et deuxième support 4,5. Le dispositif de fixation 100 est avantageusement placé en position centrée dans l'ouverture 40 en faisant coïncider la rainure annulaire 14 avec les ergots de recentrage 41 disposés sur le premier support 4 en périphérie de l'ouverture 40.

La troisième étape (figure 4c) comprend l'assemblage du dispositif de fixation 100 et du premier support au deuxième support 5. On dispose le premier support 1 muni du dispositif de fixation 100, sur le deuxième support 5 en alignant l'ouverture 40 avec le goujon 3. La présence du cône de centrage 18, disposé à l'extrémité d'insertion 12' du pied 12, permet de guider l'insertion du goujon 3 et de déplacer le dispositif de fixation 100 par rapport au premier support 4 pour aligner le passage central 10 du corps principal 1 avec le goujon 3 et rattraper l'éventuel décalage pouvant exister. Le goujon 3 pénètre dans le passage interne 10 en traversant les trous de passage 21a,21b. Le passage du goujon 3 à travers l'agrafe 2 provoque la flexion des languettes flexibles 23 de telle manière que leurs extrémités libres 23' s'éloignent axialement du trou de passage 21b. En fin d'assemblage, du dispositif de fixation 100 au deuxième support 5, l'élasticité des languettes flexibles 23 provoque automatiquement l'engagement de leurs extrémités libres 23' dans les filets du goujon 3. Plus précisément, les creusures des extrémités libres 23' prennent appui contre le fond des filets du goujon 3 pour assurer la retenue et le blocage axial du goujon 3 par rapport à l'agrafe 2. Le dispositif de fixation 100 est alors retenu assemblé au deuxième support 5 et l'ensemble est maintenu en tension d'assemblage par l'agrafe 2.

Pour le mode de réalisation des figures 6a et 6b, cette étape peut comprendre l'application d'une force supplémentaire sur le dispositif de fixation 100, ainsi que le premier support 4, pour mettre en tension le corps principal 1, entre le premier et deuxième support 4,5, en déformant les bretelles flexibles 12" par appui contre le deuxième support 5 comme cela est représenté sur la figure 6b.

A l'issue de ces étapes, le dispositif de fixation 100 retient ainsi assemblés entre eux le premier support 4 au deuxième support 5.

Lorsqu'un effort d'arrachement est appliqué, les extrémités libres 23' des languettes flexibles 23 viennent prendre appui contre la nervure de renforcement 22, agencée à la périphérie du trou de passage 20a du goujon 3 dans l'agrafe 2. Cette nervure de renforcement 22 permet de supprimer la mobilité radiale et axiale des languettes flexibles 23 qui ne peuvent alors pas se déformer suffisamment pour retirer leurs extrémités libres 23' des filets du goujon 3. Ainsi si l'on applique une force de traction sur le dispositif de fixation 100, les languettes flexibles 2 se déforment sans pouvoir désengager leur extrémités libres 23' du goujon 3 puis reviennent à leur position initiale dès que la force de traction cesse d'être appliquée. Le premier et deuxième support 4,5 restent ainsi assemblé.

Si l'on souhaite démonter l'assemblage, il est possible de dévisser le dispositif de fixation 100. Pour cela, la tête 11 est munie ici d'un écrou 6-pan 13 pour faciliter son démontage par un outil. La tête 11 pourrait être munie d'une nervure pour permettre le démontage par un tournevis.

Bien entendu l'invention n'est pas limitée au mode de mise en oeuvre décrit et on peut y apporter des variantes de réalisation sans sortir du cadre de l'invention tel que défini par les revendications.

En particulier bien qu'ici on est représenté les éléments de maintien sous la forme d'ailes flexible incurvées, il est bien évidemment possible d'envisager d'autres formes sans sortir du cadre de l'invention. Il est seulement nécessaire que ces éléments soient flexibles pour pouvoir se déformer et s'effacer lors de l'insertion du pied dans l'ouverture et qu'ils présentent une envergure suffisante pour s'étendre sous le premier support 4 quelle que soit la position radiale du dispositif de fixation 100 dans l'ouverture 40.

## Revendications

1. Dispositif de fixation (100) d'un assemblage comprenant au moins un premier support (4) et un deuxième support (5), le premier support étant muni d'une ouverture (40) pour recevoir un élément fileté (3) disposé sur le deuxième support(5), le dispositif (100) comprenant :
- un corps principal (1), définissant un passage interne (10) pour recevoir l'élément fileté (3), le passage interne s'étendant d'une première extrémité du corps principal (1), formant une tête (11), jusqu'à une seconde extrémité du corps principal (1) opposée à la première extrémité, formant un pied (12), la tête (11) étant destinée à venir en butée contre le premier support (4) et le pied (12) présentant une extrémité (12') d'insertion de l'élément fileté (3) dans le passage interne (10) et est muni, sur une surface externe, d'éléments de maintien (19,19') pouvant se déformer et s'effacer lors de l'insertion du pied (12) dans l'ouverture (40) pour retenir assemblés le corps principal (1) au premier support (4), le corps principal (1) comprenant également une fenêtre débouchant sur le passage interne (10) et délimitant un logement (15) ;
- une agrafe de verrouillage (2) disposée dans le logement (15) du pied (12), l'agrafe de verrouillage (2) étant munie de moyens de retenue (23) pour interagir avec l'élément fileté(3) et assurer la fixation du premier support (4) au deuxième support (5).

2. Dispositif de fixation (100) selon la revendication précédente dans lequel les moyens de retenue (23) sont des languettes flexibles (23) comprenant chacune une extrémité libre (23') destinée à s'engager dans les filets de l'élément fileté (3).

3. Dispositif de fixation (100) selon l'une des revendications précédentes dans lequel les éléments de maintien (19, 19') comprennent des ailes (19) flexibles incurvées.

4. Dispositif de fixation (100) selon l'une des revendications précédentes dans lequel le pied (12) du corps principal (1) est muni, sur sa surface externe, d'au moins un ergot (19') susceptible de prendre appui sur le premier support (4) et retenir assemblés le corps principal (1) au premier support (4) .

5. Dispositif de fixation (100) selon l'une des revendications précédentes dans lequel la tête (11) du corps principal (1) présente un élément saillant (13) conformé pour être manipulable en rotation par un outil.

6. Dispositif de fixation (100) selon l'une des revendications précédentes dans lequel l'extrémité d'insertion (11') du pied (11) est formée d'un cône de centrage (18) afin de guider l'insertion de l'élément fileté (3) dans le corps principal (1) lors de l'assemblage du premier support (4) au deuxième support (5).

7. Dispositif de fixation (100) selon l'une des revendications précédentes dans lequel la tête (11) du corps principal (1) comprend, sur une surface inférieure, une rainure ou un épaulement annulaire (14) pour recevoir des ergots de recentrage (41) disposés en périphérie de l'ouverture (40) du premier support (4).

8. Dispositif de fixation (100) selon l'une des revendications précédentes dans lequel l'agrafe de fixation (2) comprend des pattes de mise en tension (24) pour garantir le placage du dispositif (100) ainsi que la tenue de l'agrafe (2) au corps principal (1) en assurant une tension permanente de l'agrafe (2) au sein du logement (15).

9. Dispositif de fixation (100) selon l'une des revendications précédentes dans lequel l'extrémité du pied (12') comprend des bretelles flexibles (12").

10. Dispositif de fixation (100) selon l'une des revendications précédentes dans lequel le pied (12) comprend sur sa surface externe des plans (16) inclinés vers l'intérieur du logement (15) afin de centrer et de guider l'insertion de l'agrafe de verrouillage (2) dans le logement (15).

11. Dispositif de fixation (100) selon l'une des revendications précédentes dans lequel le logement (15) comprend sur une surface interne des butées anti-retour (17) pour prévenir le retrait l'agrafe de verrouillage (2) du logement (15).

12. Dispositif de fixation (100) selon l'une des revendications précédentes dans lequel les éléments de maintien (19, 19') présentent une envergure suffisante pour s'étendre sous le premier support (4) quelle que soit la position radiale du dispositif (100) dans l'ouverture (40).

## Patentansprüche

1. Befestigungsvorrichtung (100) einer Anordnung, die mindestens eine erste Halterung (4) und eine zweite Halterung (5) umfasst, wobei die erste Halterung mit einer Öffnung (40) zur Aufnahme eines auf der zweiten Halterung (5) angeordneten Gewindeelements (3) versehen ist, wobei die Vorrichtung (100) Folgendes umfasst:
- einen Hauptkörper (1), der einen inneren Durchgang (10) zur Aufnahme des Gewindeelements (3) bildet, wobei sich der innere Durchgang von einem ersten Ende des Hauptkörpers (1), das einen Kopf (11) bildet, bis zu einem zweiten Ende des Hauptkörpers (1), das dem ersten Ende gegenüberliegt und einen Fuß (12) bildet, erstreckt, wobei der Kopf (11) dazu bestimmt ist, an die erste Halterung (4) anzustoßen, und der Fuß (12) ein Ende (12') zum Einführen des Gewindeelements (3) in den inneren Durchgang (10) aufweist und auf einer äußeren Oberfläche mit Halteelementen (19, 19') versehen ist, die sich beim Einführen des Fußes (12) in die Öffnung (40) verformen und zurückziehen können, um den Hauptkörper (1) mit der ersten Halterung (4) zusammengebaut zu halten, wobei der Hauptkörper (1) auch ein Fenster umfasst, das in den inneren Durchgang (10) mündet und eine Aufnahme (15) begrenzt;
- eine Verriegelungsklammer (2), die in der Aufnahme (15) des Fußes (12) angeordnet ist, wobei die Verriegelungsklammer (2) mit Rückhaltemitteln (23) versehen ist, um mit dem Gewindeelement (3) zusammenzuwirken und die Befestigung der ersten Halterung (4) an der zweiten Halterung (5) sicherzustellen.

2. Befestigungsvorrichtung (100) nach dem vorstehenden Anspruch, wobei die Rückhaltemittel (23) flexible Zungen (23) sind, die jeweils ein freies Ende (23') umfassen, das dazu bestimmt ist, in die Gewindegänge des Gewindeelements (3) einzugreifen.

3. Befestigungsvorrichtung (100) nach einem der vorstehenden Ansprüche, wobei die Halteelemente (19, 19') gekrümmte flexible Flügel (19) umfassen.

4. Befestigungsvorrichtung (100) nach einem der vorstehenden Ansprüche, wobei der Fuß (12) des Hauptkörpers (1) auf seiner äußeren Oberfläche mit mindestens einer Nase (19') versehen ist, die in der Lage ist, sich auf der ersten Halterung(4) abzustützen und den Hauptkörper (1) an der ersten Halterung (4) zusammengebaut zu halten.

5. Befestigungsvorrichtung (100) nach einem der vorstehenden Ansprüche, wobei der Kopf (11) des Hauptkörpers (1) ein hervorstehendes Element (13) aufweist, das so gestaltet ist, dass es durch ein Werkzeug drehbar handhabbar ist.

6. Befestigungsvorrichtung (100) nach einem der vorstehenden Ansprüche, wobei das Einführungsende (11') des Fußes (11) als Zentrierungskonus (18) ausgebildet ist, um die Einführung des Gewindeelements (3) in den Hauptkörper (1) beim Zusammenbau der ersten Halterung (4) mit der zweiten Halterung (5) zu führen.

7. Befestigungsvorrichtung (100) nach einem der vorstehenden Ansprüche, wobei der Kopf (11) des Hauptkörpers (1) auf einer unteren Oberfläche eine ringförmige Nut oder Schulter (14) zur Aufnahme von Rezentrierungsnasen (41) umfasst, die am Umfang der Öffnung (40) der ersten Halterung (4) angeordnet sind.

8. Befestigungsvorrichtung (100) nach einem der vorstehenden Ansprüche, wobei die Befestigungsklammer (2) Spannlaschen (24) umfasst, um das Plattieren der Vorrichtung (100) sowie das Halten der Klammer (2) am Hauptkörper (1) zu gewährleisten, indem eine permanente Spannung der Klammer (2) innerhalb der Aufnahme (15) sichergestellt wird.

9. Befestigungsvorrichtung (100) nach einem der vorstehenden Ansprüche, wobei das Ende des Fußes (12') flexible Träger (12") umfasst.

10. Befestigungsvorrichtung (100) nach einem der vorstehenden Ansprüche, wobei der Fuß (12) auf seiner äußeren Oberfläche Ebenen (16) umfasst, die in Richtung des Inneren der Aufnahme (15) geneigt sind, um die Einführung der Verriegelungsklammer (2) in die Aufnahme (15) zu zentrieren und zu führen.

11. Befestigungsvorrichtung (100) nach einem der vorstehenden Ansprüche, wobei die Aufnahme (15) auf einer inneren Oberfläche Rücklaufanschläge (17) umfasst, um das Herausziehen der Verriegelungsklammer (2) aus der Aufnahme (15) zu verhindern.

12. Befestigungsvorrichtung (100) nach einem der vorstehenden Ansprüche, wobei die Halteelemente (19, 19') eine ausreichende Spannweite aufweisen, um sich unabhängig von der radialen Position der Vorrichtung (100) in der Öffnung (40) unter die erste Halterung (4) zu erstrecken.

## Claims

1. Device (100) for attaching an assembly comprising at least a first support (4) and a second support (5), the first support being provided with an opening (40) for receiving a threaded element (3) arranged on the second support (5), the device (100) comprising:
- a main body (1), defining an internal passage (10) for receiving the threaded element (3), the internal passage extending from a first end of the main body (1), forming a head (11), to a second end of the main body (1) opposite the first end, forming a foot (12), the head (11) being intended to abut against the first support (4) and the foot (12) having an end (12') for inserting the threaded element (3) into the internal passage (10) and is provided, on an outer surface, with holding elements (19, 19') which can be deformed and retracted during the insertion of the foot (12) into the opening (40) in order to hold the the main body (1) and the first support (4) together, the main body (1) also comprising a window opening onto the internal passage (10) and delimiting a housing (15);
- a locking clip (2) arranged in the housing (15) of the foot (12), the locking clip (2) being provided with retaining means (23) for interacting with the threaded element (3) and ensuring the attachment of the first support (4) to the second support (5).

2. Attachment device (100) according to the preceding claim, wherein the retaining means (23) are flexible tabs (23), each comprising a free end (23') designed to engage with the threads of the threaded element (3).

3. Attachment device (100) according to any of the preceding claims, wherein the holding elements (19, 19') comprise flexible curved wings (19).

4. Attachment device (100) according to any of the preceding claims, wherein the foot (12) of the main body (1) is provided, on its outer surface, with at least one lug (19') that is capable of resting on the first support (4) and holding the main body (1) and the first support (4) together.

5. Attachment device (100) according to any of the preceding claims, wherein the head (11) of the main body (1) has a projecting element (13) that is shaped so as to be rotationally manipulable by a tool.

6. Attachment device (100) according to any of the preceding claims, wherein the insertion end (11') of the foot (11) is formed by a centering cone (18) in order to guide the insertion of the threaded element (3) into the main body (1) during the assembly of the first support (4) to the second support (5).

7. Attachment device (100) according to any of the preceding claims, wherein the head (11) of the main body (1) comprises, on a lower surface, an annular groove or shoulder (14) for receiving recentering lugs (41) that are arranged on the periphery of the opening (40) of the first support (4).

8. Attachment device (100) according to any of the preceding claims, wherein the attachment clip (2) comprises tensioning flaps (24) for ensuring the positioning of the device (100) as well as the hold of the clip (2) against the main body (1) by ensuring constant tension on the clip (2) within the housing (15).

9. Attachment device (100) according to any of the preceding claims, wherein the end of the foot (12') comprises flexible straps (12").

10. Attachment device (100) according to any of the preceding claims, wherein the foot (12) comprises, on its outer surface, planes (16) that are inclined toward the interior of the housing (15) in order to center and guide the insertion of the locking clip (2) into the housing (15).

11. Attachment device (100) according to any of the preceding claims, wherein the housing (15) comprises non-return stops (17) on an internal surface for preventing the removal of the locking clip (2) from the housing (15).

12. Attachment device (100) according to any of the preceding claims, wherein the holding elements (19, 19') have a sufficient span in order to extend under the first support (4) regardless of the radial position of the device (100) in the opening (40).
